# EUROPEAN PATENT APPLICATION

(11) **EP 4 144 565 A1**
(43) Date of publication of application: **08.03.2023**
(21) Application number: 22185434.2
(22) Date of filing: 18.07.2022
(51) Int. Cl.: B60L 5/16, B60L 5/24, B60L 5/30, B60L 5/19, B60L 5/00, B60L 5/22

(54) **CURRENT COLLECTOR FOR CHARGING ELECTRIC VEHICLES**

(30) Priority: 02.09.2021 PL 43887021
(71) Applicant: EC Engineering Spólka Z Ograniczona Odpowiedzialnoscia, 30-150 Krakow (PL)
(72) Inventor: Lasiewicz, Bartosz, 31-261 Krakow (PL); Rozmus, Pawel, 38-460 Jedlicze (PL)
(74) Representative: AOMB Polska Sp. z.o.o.

(57) **Abstract**

The present invention relates to a current collector for rapid charging systems for urban and suburban buses or heavy vehicles that utilize an electric or a hybrid drive. The articulated connection of an upper arm (13), a tension rod (20) and a drive arm (12) forms a kinematics based on the four-bar linkage, wherein the upper arm (13) is connected to a head (14) that is guided to a charging channel of a stationary charging station located at bus stops or end stations.

## Description

### Technical field

The present invention relates generally to rapid charging systems for electrically powered vehicles. More particularly, the invention relates to a current collector enabling rapid and unmanned charging of vehicles equipped with electric drive by connecting the contact head of the current collector installed on the vehicle roof to a fixed charging station, which is part of the transport infrastructure. The current collector is designed for any vehicle, in particular for urban and suburban buses, that utilizes an electric or a hybrid drive, and that are equipped with electrical energy storage devices such as batteries or supercapacitors.

### Background art

Recently, in public transport, solutions for rapid charging of passenger vehicles with an electric drive while travelling along a predetermined route, are gaining in popularity. The charging takes place during a short time while the vehicle is stationary at stops or at the start and end stations, using charging stations installed within the stop or the start and end stations. Several designs of current collectors for rapid charging of vehicles with an electric drive are known from the literature.

EP3359412B1 discloses a quick charging system for electrically driven vehicles, in particular electric buses or the like, and a method for forming an electrically conductive connection between a vehicle and a charging station. The invention contains a contact device and a guide device which can be arranged on a vehicle. With the guide device, the contact device can be positioned in the vertical and horizontal direction relative to the contact device in the charging station and can be placed in the contact position. The contact device includes a carrier of contact elements in the contact position with the charge contact elements. Each contact element can be electrically contacted to form contact pairs. The guide device guides the contact elements or the charge contact elements to the contact position. It is designed such that when the contact device and the charge contact device are brought together, a physical contacting of the contact elements and the charge contact elements is inhibited before reaching the contact position.

Another publication, EP3033244B1, discloses an electrical energy transmission device for stationary charging of electrical energy stores and/or for mobile supplying of electrical drive units. The device is designed as an articulated arm system, which can swivel between an energy-transmitting extended position and a retracted position, where the energy transmission is interrupted.

WO2021037351 discloses a positioning unit for electrically driven vehicles and a method for forming an electrically conductive connection between an electrically driven vehicle and a charging station. The positioning unit is designed such that it can be installed on a vehicle roof, wherein a contact device of the positioning unit is movable relative to a contact device in the charging station. The positioning unit is in the form of an articulated arm with a pivoting mechanism and a drive device for driving the articulated arm.

From yet another patent application by the same Applicant, EP3256341A1, a rapid charging system for electrically powered vehicles is known. This system includes a current collector installed via an electrically insulated frame on the vehicle roof. In the frame, an arm terminated with a contact head to form an electrically conductive connection with the charging station channel, is bearing-mounted swingingly in the vertical and the horizontal planes. The lifting drive is in the form of an actuator connected to the arm and the turntable through which the arm is bearing-mounted in the frame.

Polish patent application filed by the same Applicant, PL396813A1, also describes a pantograph for rail vehicles, designed as a parallelogram system based on two articulated quadrilaterals and comprising, i.a., a lower arm (girder) pivotally bearing-mounted in the supporting frame, an upper arm articulated to the lower arm, a control rod articulated to the supporting frame and the upper arm, and a stabilizing bar articulated to the lower arm and the upper arm through a slider of the slide unit. The individual pairs of pivots are connected to each other by hinge joints with horizontal rotation axis (with one degree of freedom), allowing the slide unit to move parallel to the roof in a vertical plane.

Known solutions require a precise approach to the charging station. Another inconvenience is the different shapes of the charging channels of the charging stations, to which the current collector heads must be adapted, so that when a vehicle is approaching, they are compatibly inserted into the charging channels in a way that allows the flow of electricity. Most solutions require the vehicle to be stopped in order to be able to extend the current collector arm with the contact head towards the charging station. At present, vehicles adapted to rapid charging have limited cooperation with the charging station channel when the vehicle is tilted from the vertical and changes its position, and the charging time is shorter due to the need to stop the vehicle before starting to lift the current collector. The objective of the invention is to propose a current collector for use in rapid charging systems for electric vehicles that solves the problems of the prior art. Yet another objective is to provide compatibility of the current collector with different charging stations.

### Summary of the invention

The subject-matter of the invention is a current collector for rapid charging systems of vehicles equipped with an electric drive, comprising:
a frame adapted to be mounted on a vehicle,
a drive arm that is swingingly bearing-mounted in the frame by its one end and connected in an articulated manner to an upper arm by its other end,
the upper arm articulated to the drive arm and to a tension rod,
the tension rod articulated at one end to the frame and at the other end articulated to the upper arm,
wherein the frame, the drive arm, the upper arm and the tension rod constitute links of a kinematic mechanism based on a four-bar linkage,
a contact head attached to the end of the upper arm to form an electrically conductive connection to a compatible contact device which is part of a stationary charging station, a lifting and lowering drive for moving the drive arm and the upper arm together with the head between the rest position in which the arms are retracted and the current flow is interrupted, and the working position in which the arms are extended and the current flows between the contact head and the compatible contact device of the stationary charging station,
wherein the tension rod is at one end connected by a ball joint to the frame, and at the other end by a hinge joint with horizontal pivot axis to the upper arm, wherein the drive arm is at one end connected by a hinge joint with horizontal pivot axis to the frame and at the other end by a ball joint to the upper arm.

In one of the embodiments, the current collector includes a rocker articulated to an actuator of the lifting and lowering drive and swingingly connected to the drive arm. The lifting and lowering drive has preferably the form of an actuator which at one end is articulated to the frame and at the other end is articulated to the rocker.

In one of the preferred embodiments, the current collector includes a centering system comprising a centering spring that is articulated to the upper arm and to the rocker. By means of the centering system, the current collector arm returns to its nominal position when the external force is no longer applied.

In yet another embodiment, the current collector includes a compression spring that is articulated at one end to the rocker, and at the other end to the drive arm.

The current collector has preferably two tension rods forming one tension rod assembly.

### Advantageous effects of the invention

Due to provision of a multi-articulated mechanism of the swivel arms together with the rotating contact elements of the head, a continuous cooperation, and thus an uninterrupted current flow, is ensured between the contact head of the current collector and the compatible contact device of the charging station when the vehicle is tilted from the vertical or changes its position that may be caused by the vehicle moving on an uneven surface or by the vehicle tilting when disembarking passengers, as it is often the case with buses.

The design of the current collector according to the invention also ensures a longer charging time for the vehicle at the charging station. The charging process can start before the vehicle is stopped and can continue while the vehicle is moving away from the stop. The driver's interference in operating the system is minimal. On the other hand, extending the charging time allows to reduce the number of batteries or battery packs and their weight which contributes to the reduction of energy consumption and transport of more cargo or passengers, and does not extend the downtime at stops.

### Description of drawings

The subject-matter of the invention will be now explained in more details with reference to the drawings, wherein:
Fig. 1 - shows a quadrilateral kinematic system.
Fig. 2 - shows the current collector in an isometric view.
Fig. 3 - shows the current collector in a side view.
Fig. 4 - shows the current collector in a top view.

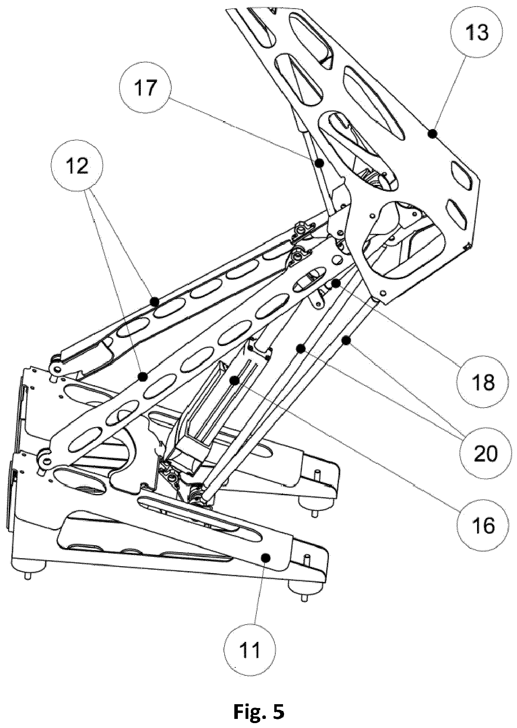

Fig. 5 - shows an isometric projection with zoomed kinematic elements.
Fig. 6 - shows the current collector in lifted state with connected head for charging station variants 2a and 2b in a side view.
Fig. 7 - shows the current collector with connected head for charging station variants 2a and 2b in a front view.
Fig. 8 - shows the arrangement of contact elements housed in the head before connecting the head to the charging channel and when the devices are connected, the view shows the head in the variant for the charging station 2b.

### Detailed description of a preferred embodiment

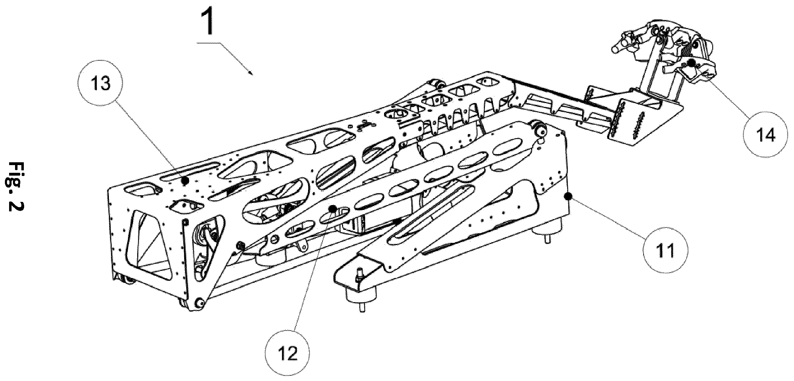

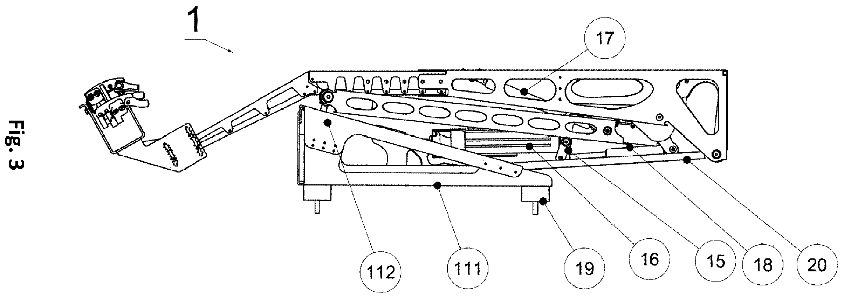

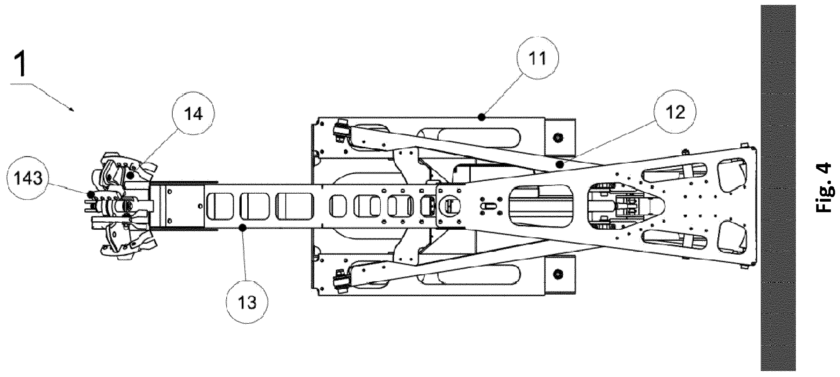

In one of the preferred embodiments, the current collector 1 according to the invention is shown in Figs. 2-4.

According to this embodiment, the current collector 1 has a frame 11 consisting of two pairs of longitudinal members 111, 113, i.e. the lower longitudinal member 111 and the upper longitudinal member 112. The frame 11 is electrically insulated from the vehicle roof by means of electrical insulators or vibration insulators 19, or vibration insulators combined into one system with electrical insulators.

The drive arm 12 (girder) is at one end pivotably bearing-mounted in the frame 11. In the embodiment shown, the drive arm 12 comprises a right-hand and a left-hand arm mounted with hinge joints to the longitudinal members 112. At the other end, the drive arm 12 is connected by a ball joint to the upper arm 13, with a contact head 14 installed at the end thereof.

A tension-rod 20 is bearing-supported in the frame 11, said tension rod 20 at one end is connected by a ball joint to the frame 11 and at the other end by a hinge joint to the upper arm 13. In the embodiment discussed, the current collector 1 has two tension rods 20 working as one assembly of tension rods. The tension rods 20 are attached with a hinge joint at the end of the upper arm 13, which connects to the drive arm 13, and run converging towards the frame 11, to which they are connected by a ball joint.

The hinge joint is understood as an articulated joint with one degree of freedom that enables rotation around a horizontal axis (perpendicular to the longitudinal axis of the vehicle) in a vertical plane.

A ball joint is understood as an articulated joint with three degrees of freedom which allows rotation around three axes.

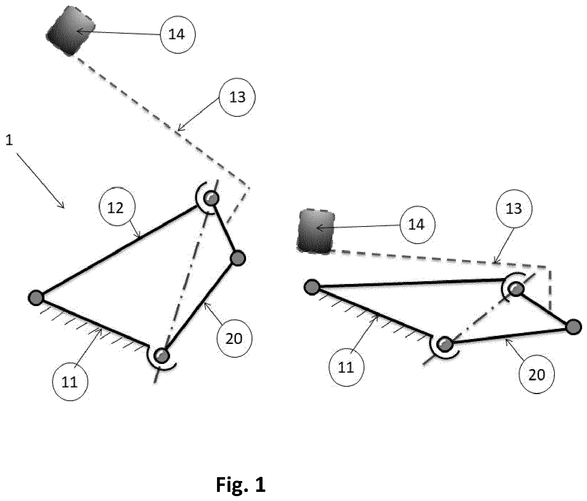

The kinematic diagram of the above-described design of the current collector 1 is shown in Fig. 1, in the working position with the contact head placed in the compatible contact device of the charging station, and in the rest position where the current collector 1 is folded and the drive arm 12 with the upper arm 13 rest on the frame 11, respectively.

The kinematic mechanism is based on the four-bar linkage, the links of which are articulated in such a way that two opposite joints are ball joints, and the other two opposite joints are hinge joints, allowing the upper arm 13 with the contact head 4 to rotate in relation to the movable axis passing through the two ball joints.

In order to lift and lower the drive arm 12 and the upper arm 13 with contact head 14, the current collector 1 is equipped with a lifting and lowering drive. The lifting and lowering drive has an actuator 16 which at one side is pivotally connected to the frame 11 by means of a pivot pair, and at the other side pivotally connected to a rocker 15 which in turn is swingingly connected to the drive arm 12. Another element is a compression spring 18, which at one end is articulated to the rocker 15 and at the other end is articulated to the drive arm 12. The function of the compression spring 18 is to act on the upper arm 13 to ensure that the contact head 14 is sufficiently pressed against the compatible contact device of the charging station 2. Due to the connection of the rocker 15 to the drive arm 12, the extension of the actuator 16 results in lifting of the drive arm 12 and the upper arm 13.

The current collector 1 may also have a centering system that is part of or cooperates with the lifting and lowering drive. Its component is a centering spring 17, which is used to relieve the lifting and lowering drive and to centre the drive arm 12 and the upper arm 13 after the charging process is complete, when the contact head 14 leaves the compatible contact device of the charging station 2. The centering spring 17 is articulated to the upper arm 13 and to the rocker 15.

The kinematic mechanism of the current collector 1, due to the articulated connection of the relevant links, allows the upper arm 13 to tilt sideways when an external force due to the pressure of the contact head 14 is applied to the walls of the contact device of the charging station 2 which is usually in the form of an elongated charging channel 21 bounded by side walls, and through the centering system it returns to its nominal position after the external force stops to act.

The current collector 1 according to the invention finds particular application in rapid charging systems for electric vehicles, in particular electric or hybrid buses, which travel along a predetermined route cyclically.

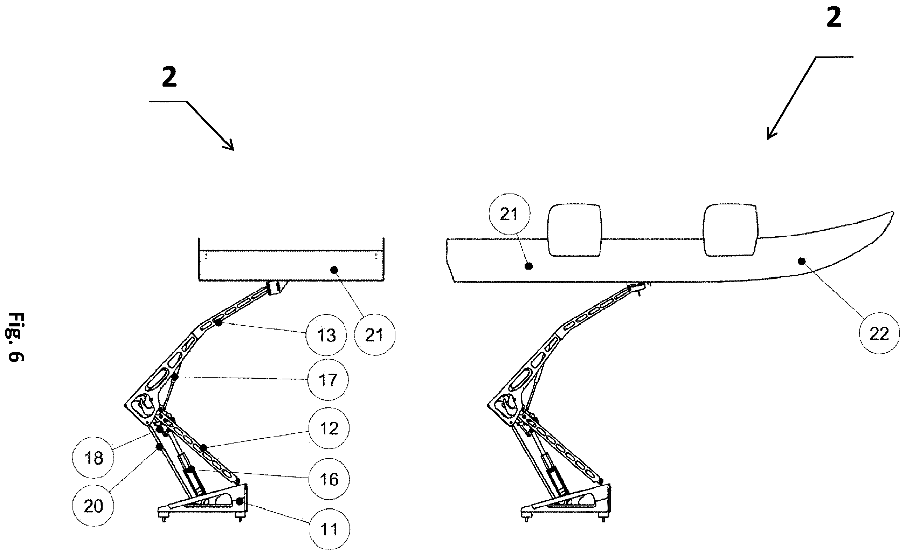

An example of such a rapid charging system is shown in Figs. 6-8.

According to this example, the rapid charging system consists of two parts: the current collector 1, according to the present invention, installed on the roof of the vehicle, and a stationary charging station 2 which is part of the transport infrastructure.

The charging station 2 can be located near the bus stop or the start and end stations. The charging station 2 is equipped with a contact device that is used to connect to the contact head 14 of the current collector 1 to form a conductive connection. The contact device of the charging station 2 can be placed on a vertical pole or mast and a transverse beam by means of a rigid or movable handle. Another method is to attach to the stop shelter. In a preferred embodiment, the contact device consists of a charging channel 21 and alternatively a guide funnel 22. The guide funnel 22 can be resilient or have a flexible suspension of the support structure, which minimizes the adverse effect of the impacts of the contact head 14 of the current collector 1. The shape of the guide funnel 22 is similar to the letter "V" and it extends parallel to the direction of travel. Its shape is designed to eliminate the risk of missing or disconnecting the contact head 14 when the vehicle is approaching the charging station 2. Electrically conductive surfaces 23, e.g. in the form of copper strips or conductive pads against which electric contacts 142 of the contact head 14 are pressed, extend along the charging channel 21, on the inside.

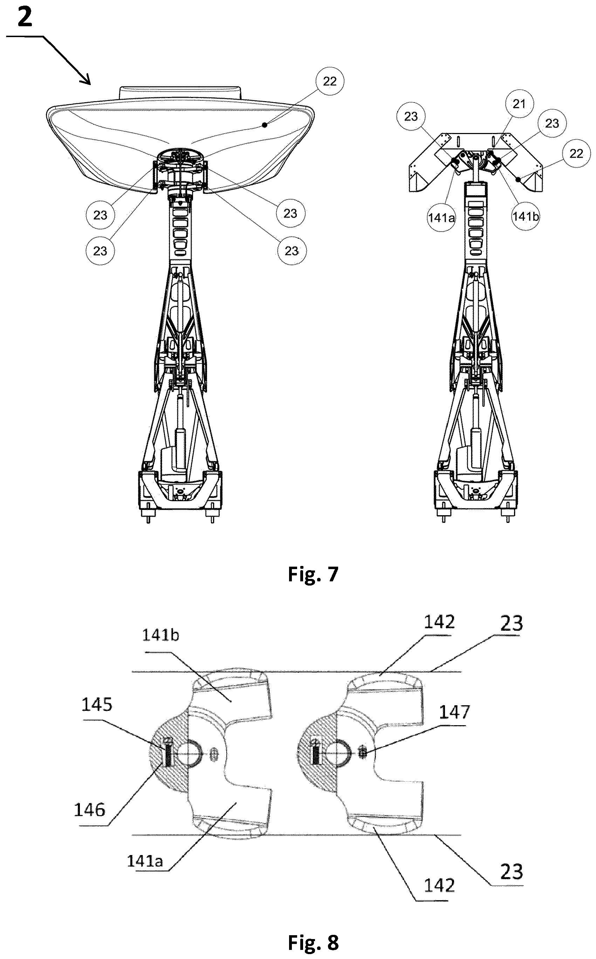

Fig. 8 shows the structure of the contact head 14 having electrical contacts 142 mounted on the pressure elements 141 that are rotatably arranged on the rotation axis with a limited operating angle. The resilient element presses the electric contacts 142 against the electric conductive surfaces 23 of the charging channel 21 arranged parallel on the opposite sides of the rotation axis of the pressure elements 141. The pressing elements of a given pair 141a, 141b point to the opposite direction towards the electric conductive surfaces 23 of the charging channel 21. Adjacent pressure elements 141a, 141b are coupled by a spring 145 positioned between them so that these elements push off each other. In addition, a limiter 147 blocked by a pressure element 141 is located between adjacent contact elements 141a, 141b, to set the operating range of the contacts 142. The electrical contacts 142 are connected to the electrical cables which supply current to the bus batteries or other electrical devices.

Below a charging procedure is described consisting of lifting the current collector 1 to the working position, connecting the contact head 14 to the charging channel 21 and the current flow, disconnecting the contact head 14 from the charging channel 21 and stopping the current flow, and lowering the current collector 1 to the rest position and leaving the charging station 2 by the vehicle.

In the first step, the drive arm 12 and the upper arm 13 together with the contact head 14 are lifted from the rest position to the working position using the actuator 16 of the lifting and lowering drive.

The lifting of the arms can be initiated by the driver by pressing an appropriate switch or initiated by the system, which detects the presence of a charging station in a given area. When the charging is complete, the arms are being folded into the neutral position before the bus moves. The automatic lowering of the current collector 1 into the working position requires the rapid charging system to be fitted with a suitable system or a set of sensors, controller and actuators. The system detects the presence of the vehicle and initiates lifting of the drive arm 12 and the upper arm 13 with the head 14. The sensors can be, for example, infrared sensors or other motion sensors (operated by ultrasonic or electromagnetic waves). The individual system components can communicate with each other via the Bluetooth wireless communication standard, near-field communication (NFC) standard, RFID, Z-Wave, ZigBee or WiFi, or via the satellite Global Positioning System (GPS).

In addition, setting the current collector 1 from the rest position to the working position in the first step can take place even when the bus is approaching the charging station 2 (variant 2b in Fig. 6) or only after it has stopped under the charging channel 21 (variant 2a in Fig. 6).

In the next step, the contact head 14 is connected to the charging channel 21, wherein the current is flowing and the energy storage device, e.g. a battery pack installed in the bus, is charged. The kinematic mechanism of the current collector 1 ensures an uninterrupted charging process by allowing the upper arm 13 with the contact head 14 to tilt sideways when an external force caused by the pressure of the contact head 14 against the charging channel 2 is applied, which may be due to an imprecise approach to the charging station, uneven terrain or tilting of the bus at the bus stop and during boarding and disembarking passengers.

In the next step, the electrical connection is interrupted and the contact head 14 is disconnected from the charging channel 21. The head can be disconnected by lowering the drive arm 12 and the upper arm 13 with the contact head 14 downwards while the bus is still stationary at the bus stop or when the bus is leaving the bus stop with the current collector 1 in the working position (variant 2b), while the contact head 14 is still in the charging channel 21 and the current flow has not yet been interrupted.

In the last stage, the current collector 1 is being completely retracted to the rest position, in which the drive arm 12 and the upper arm 13 rest on the frame 1.

## Claims

1. A current collector (1) for rapid charging systems of electrically powered vehicles comprising:
a frame (11) adapted to be mounted on a vehicle,
a drive arm (12) that is swingingly bearing-mounted in the frame (11) by its one end and connected in a articulated manner to an upper arm (13) by its other end, the upper arm (13) articulated to the drive arm (12) and to a tension rod (20), the tension rod (20) articulated at one end to the frame (11) and at the other end articulated to the upper arm (13),
wherein the frame (11), the drive arm (12), the upper arm (20) and the tension rod (20) constitute links of a kinematic mechanism based on a four-bar linkage,
a contact head (14) attached to the end of the upper arm (13) to form an electrically conductive connection to a compatible contact device which is part of a stationary charging station (2),
a lifting and lowering drive for moving the drive arm (12) and the upper arm (13) together with the head (14) between the rest position in which the arms are retracted and the current flow is interrupted, and the working position in which the arms are extended and the current flows between the contact head (14) and the compatible contact device of the stationary charging station (2),
**characterized in that** the tension rod (20) is at one end connected by a ball joint to the frame (11), and at the other end by a hinge joint with horizontal pivot axis to the upper arm (13), wherein the drive arm (12) is at one end connected by a hinge joint with horizontal pivot axis to the frame (11) and at the other end by a ball joint to the upper arm (13).

2. The current collector according to claim 1, **wherein** it further includes a rocker (15) articulated to an actuator (16) of the lifting and lowering drive and swingingly connected to the drive arm (12).

3. The current collector according to claim 1 or 2, **wherein** the lifting and lowering drive is the actuator (16) which at one end is articulated to the frame (11) and at the other end is articulated to the rocker (15).

4. The current collector according to claim 1 or 2 or 3, **wherein** it includes a centering system comprising a centering spring (17), articulated to the upper arm (13) and the rocker(15).

5. The current collector according to claim 1 or 2 or 3 or 4, **wherein** it includes a compression spring (18) that is articulated at one end to the rocker (15), and at the other end to the drive arm (12).

6. The current collector according to claim 1, **wherein** it has two tension rods (20) forming one tension rod assembly, said rods (20) converge inwards from the upper arm (13) toward the frame (11).
